# EUROPEAN PATENT APPLICATION

(11) **EP 1 271 003 A2**
(43) Date of publication of application: **02.01.2003**
(21) Application number: 02077068.1
(22) Date of filing: 27.05.2002
(51) Int. Cl.: F16H 59/44

(54) **Method and system for zero speed estimation**

(30) Priority: 20.06.2001 US 885718
(71) Applicant: Delphi Technologies, Inc., Troy, MI 48007 (US); General Motors Corporation, Detroit, Michigan 48265-3000 (US)
(72) Inventor: Klein, Steven D., Munger, MI 48747 (US); Grougan, Paul A., Novi, MI 48374 (US); Wendling, Scott M., Montrose, MI 48457 (US); Sherman, Scott P., Fenton, MI 48430 (US)
(74) Representative: Denton, Michael John

(57) **Abstract**

Disclosed is a method of determining an estimate of zero speed of a vehicle, the method comprises obtaining or acquiring a drive train status signal, a brake signal, a parking brake signal, a vehicle speed signal, and a throttle position signal. The method further comprises formulating a zero speed status signal under selected conditions to in response to at least one of the above mentioned signals.

## Description

### BACKGROUND

In many systems, such as transmissions, motors, and steering systems, it is desirable to determine or monitor the speed of rotation of certain objects within the systems or of the vehicle relative to a road surface. Typically, a fixed sensor is attached to or on a casing associated with the system to measure the rotational speed of an object to be monitored or providing an appropriate ratio to the desired speed. Although such a fixed sensor is acceptable for most speed sensing applications, there are situations where a fixed sensor is unable to accurately measure the desired speed or the expense of the sensor is prohibitive. For example, measuring the speed at zero speed or in the near zero speed region cannot easily be accomplished with such fixed sensors. Additionally, such fixed sensors generally cannot provide an accurate measurement at zero speed or near zero speed. In many vehicle applications detecting that the vehicle is truly at zero speed is complicated by the inaccuracy of the sensors employed. Yet another problem associated with fixed sensors is sensing directional rotational speed. Such measurements usually require quadrature-decoding or similar type hardware.

In view of the abovementioned considerations, it would be desirable to provide a means of accurately determining when an object at zero speed. More particularly, it would be desirable to be able to determine low or zero speed operation without requiring additional sensors.

### BRIEF SUMMARY

A method of determining an estimate of zero speed of a vehicle, the method comprises obtaining or acquiring a drive train status signal, a brake signal, a parking brake signal, a vehicle speed signal, and a throttle position signal. The method further comprises formulating a zero speed status signal under selected conditions to in response to at least one of the abovementioned signals.

A storage medium encoded with a machine-readable computer program code for determining an estimate of zero speed of a vehicle, the storage medium including instructions for causing controller to implement the abovementioned method.

A computer data signal embodied in a carrier wave for determining an estimate of zero speed of a vehicle, the computer data signal comprising code configured to cause a controller to implement the abovementioned method.

### BRIEF DESCRIPTION OF THE DRAWINGS

The present invention will now be described, by way of an example, with references to the accompanying drawings, wherein like elements are numbered alike in the several figures in which:
Figure 1 depicts a partial schematic of a vehicle control system and an exemplary embodiment;
Figure 2 depicts an exemplary embodiment of a zero speed estimation algorithm;
Figure 3 depicts a partial schematic of a vehicle control system and an alternative embodiment; and
Figure 4 depicts an alternative embodiment of a zero speed estimation algorithm.

### DETAILED DESCRIPTION OF AN EXEMPLARY EMBODIMENT

An exemplary embodiment is described herein by way of illustration as may be applied to a vehicle and more specifically a vehicle steering system. While a preferred embodiment is shown and described, it will be appreciated by those skilled in the art that the invention is not limited to the embodiment and application described herein, but also to any vehicle where zero speed estimation or determination is desired. Moreover, while an exemplary embodiment is disclosed and illustrated with reference to Boolean logic and combinatorial logic gates, it will be appreciated that such illustration should not be construed as limiting. Those skilled in the art will appreciate that a variety of potential implementations and configurations are possible within the scope of the disclosed embodiments.

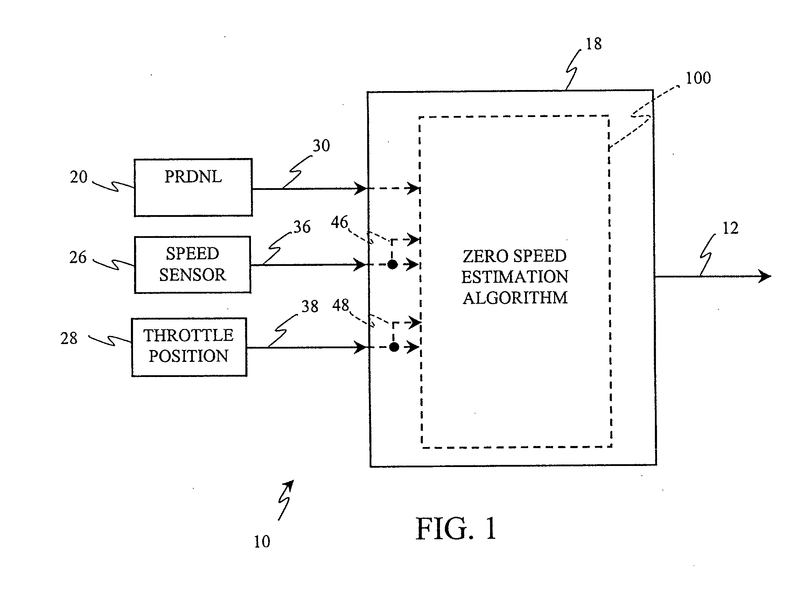

Referring to Figure 1, a block diagram partially depicting a vehicle with control system 10. The control system 10 includes, but is not limited to, a controller 18 coupled to various sensors and interfaces for performing a variety of processes prescribed by the desired controlling functions. Also depicted are the gear selector 20, vehicle speed sensor 26, and throttle position sensor 28. In addition, the control system 10 may also include, but not be limited to, a parking brake switch 22 and a brake switch 24.

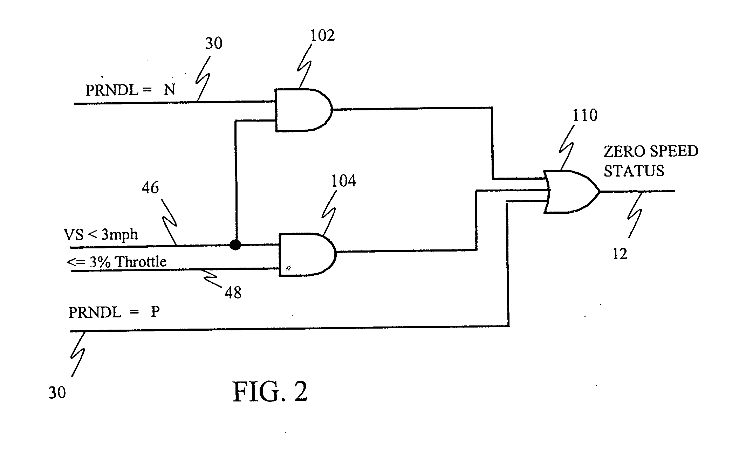

Referring as well to Figure 2, an exemplary embodiment of the zero speed estimation algorithm is depicted. Various signals indicative of the status of the vehicle are received and processed by the controller 18 in a zero speed estimation algorithm 100. A drive train status signal 30 indicative of a selected gear is monitored. For example in a vehicle such a drive train status signal 30 may include five states indicative of Park, Reverse, Neutral, Drive and Low (PRNDL). Secondly, the vehicle speed sensor 26 generates a vehicle speed signal 36 proportionally related to the vehicle speed. From this vehicle speed signal 36, a vehicle speed status signal 46 is generated when the vehicle speed is less than a selected threshold value. The vehicle speed status signal 46 may be generated by a comparator or similar means of comparing the measured vehicle speed signal 36 and a selected threshold. In an exemplary embodiment, the vehicle speed status signal 46 may be a two state signal with a valid state indicating that the vehicle speed is less than the selected threshold (e.g., less than about 3 miles per hour,). Finally, a throttle position signal 38 provides an indication of the percentage throttle applied by an operator as measured by a throttle position sensor 28. Similarly, a throttle position status signal 48 is generated when the throttle position is less than a selected threshold. The throttle position status signal 48 may be generated by a comparator or similar means of comparing the measured throttle position signal 38 and a selected threshold. In an exemplary embodiment, the throttle position status signal 48 may be a two state signal with a valid state indicating that the throttle position is less than the selected threshold (e.g., about 0.0 percent).

In order to perform the prescribed functions and desired processing, as well as the computations therefore (e.g., the execution of the zero speed estimation algorithm(s), and the like), controller 18 may include, but not be limited to, a processor(s), computer(s), memory, storage, register(s), timing, interrupt(s), communication interfaces, and input/output signal interfaces, and the like, as well as combinations comprising at least one of the foregoing. For example, controller 18 may include input signal filtering to enable accurate sampling and conversion or acquisitions of such signals from communications interfaces. Additional features of controller 18 and certain processes therein are thoroughly discussed at a later point herein.

As exemplified in a disclosed embodiment as depicted in Figure 2 one such process may be estimating and determining from various system measurements, parameters, and states when a vehicle is operating at zero speed. Controller 18 receives various input signals including, but not limited to, those identified above, to facilitate such processing and may provide one or more output signals in response. In an embodiment, the controller 18 receives as input signals: the drive train status signal 30, the vehicle speed signal 36 and/or its status, and the throttle position signal 38 and/or its status. The zero speed estimation algorithm 100 generates a zero speed status signal 12 to facilitate other processes of controller 18 and vehicle operation.

The zero speed estimation algorithm 100 may now be described by way of reference once again to Figure 2. The status of the various signals is determined and then utilized in a logical combination to formulate a zero speed status signal 12. A valid state for the zero speed status signal 12 representing that the algorithm estimates the vehicle is at about zero speed, while an invalid state represents the converse. Under any one of several conditions a valid, zero speed status signal 12 indicating zero speed will be generated. The first such condition occurs when the drive train status signal 30 indicates the vehicle is in the Park (P) state.

The second condition for a valid zero speed status signal 12 is when the vehicle speed status signal 46, is valid which indicates that vehicle speed is less than a selected value; and the throttle position status signal 48 is valid, which indicates that the throttle is at about zero percent. In an exemplary embodiment a selected minimum value of three miles per hour (mph) has been utilized for the selected value of vehicle speed. In Figure 2, the logical combination identified is performed at logic gate 104 providing the prescribed logical functions on the specified inputs.

Moving now the third condition for a valid zero speed status signal 12, which occurs when the drive train status signal 30 indicates the vehicle is in the Neutral (N) state and, simultaneously the vehicle speed status 46 indicates that vehicle speed is less than a selected value. Once again, in an exemplary embodiment a selected minimum value of three miles per hour (mph) has been utilized. In Figure 2, the logical combination identified is performed at logical and-gate 102 providing an ANDing function of the two inputs.

Finally, a valid zero speed status signal 12 is generated via OR logic gate 110 if one or more of the abovementioned conditions is satisfied. The resultants of the respective gates 102, and 108 as well as when the status of the drive train status signal 30 indicating the vehicle is in the Park (P) state are thereafter applied to a combining gate 110 providing a logical ORing of the signals, the resultant of which is the resultant zero speed status signal 12. Therefore, by the logic provided an estimation of when the vehicle is operating at zero speed is accomplished for most operation conditions.

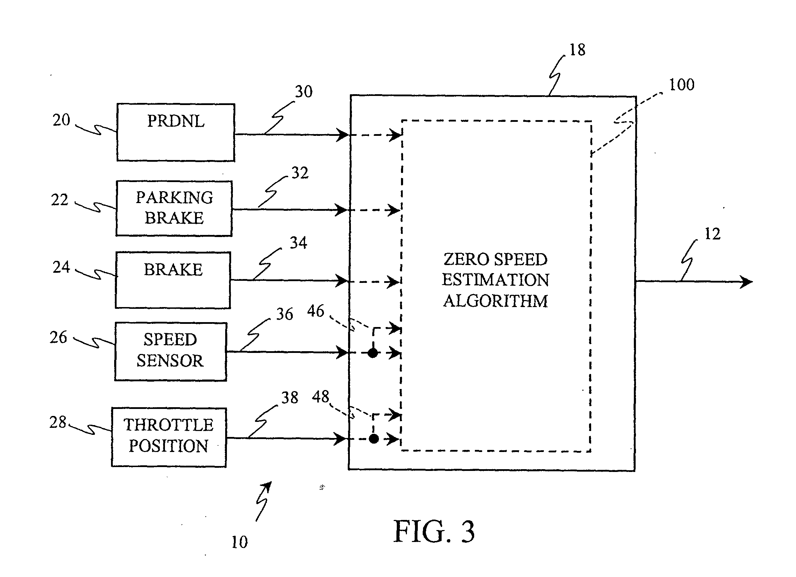

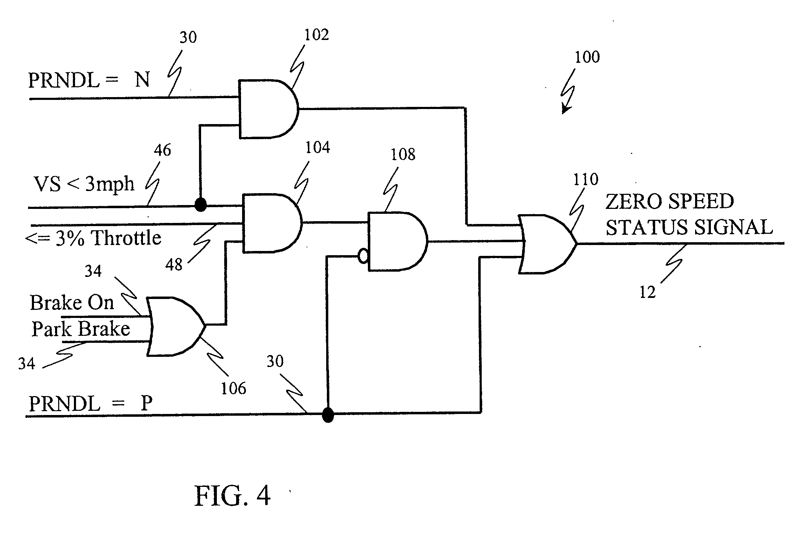

Referring now to Figures 3 and 4, an alternative embodiment of the zero speed estimation algorithm is depicted. Once again, various signals indicative of the status of the vehicle are received and processed by the controller 18 in a zero speed estimation algorithm 100. In this embodiment, in addition to those described in the abovementioned embodiment, a parking brake signal 32 is monitored, which is representative of the status of the parking brake switch 22. In an exemplary embodiment, a valid or active state of the parking brake signal 32 indicates the application of a parking brake in a vehicle. A brake signal 34 is also monitored, which is representative of the status of the brake switch 24. Once again, in an exemplary embodiment, a valid or active state of the brake signal 34 indicates and the application of a vehicle brake.

In an alternative embodiment as in the abovementioned embodiments, and as depicted in Figure 4 a process executed by controller 18 may be estimating and determining from various system measurements, parameters, and states when a vehicle is operating at zero speed. Controller 18 receives various input signals including, but not limited to, those identified above, to facilitate such processing and may provide one or more output signals in response. In addition, the controller 18 receives as input signals: a parking brake signal 32, and a brake signal 34. The zero speed estimation algorithm 100 generates a zero speed status signal 12 to facilitate other processes of controller 18 and vehicle operation.

The zero speed estimation algorithm 100 may now be described by way of reference once again to Figure 4. The status of the various signals is determined and then utilized in a logical combination to formulate a zero speed status signal 12. A valid state for the zero speed status signal 12 representing that the algorithm estimates the vehicle is at about zero speed, while an invalid state represents the converse. Under any one of several conditions a valid, zero speed status signal 12 indicating zero speed will be generated. The first such condition occurs when the drive train status signal 30 indicates the vehicle is in the Park (P) state.

The second condition for a valid zero speed status signal 12 is when the drive train status signal 30 indicates the vehicle is not in the Park (P) state and all of the following are also true: (1) the vehicle speed status signal 46, is valid which indicates that vehicle speed is less than a selected value; (2) the throttle position status signal 48 is valid, which indicates that the throttle is at about zero percent; (3) either the brake or parking brake is set as indicated by the valid state of the brake signal 34 and parking brake signal 32 respectively. In an exemplary embodiment a selected minimum value of three miles per hour (mph) has been utilized for the selected value of vehicle speed. In Figure 3, the logical combination identified is performed at logic gates 104, 106, and 108 providing the prescribed logical functions on the specified inputs.

Moving now the third condition for a valid zero speed status signal 12, which occurs when the drive train status signal 30 indicates the vehicle is in the Neutral (N) state and, simultaneously the vehicle speed status 46 indicates that vehicle speed is less than a selected value. Once again, in an exemplary embodiment a selected minimum value of three miles per hour (mph) has been utilized. In Figure 4, the logical combination identified is performed at logical and-gate 102 providing an ANDing function of the two inputs.

Finally, a valid zero speed status signal 12 is generated via OR logic gate 110 if one or more of the abovementioned conditions is satisfied. The resultants of the respective gates 102, and 108 as well as when the status of the drive train status signal 30 indicating the vehicle is in the Park (P) state are thereafter applied to a combining gate 110 providing a logical ORing of the signals, the resultant of which is the resultant zero speed status signal 12. Therefore, by the logic provided an estimation of when the vehicle is operating at zero speed is accomplished for most operation conditions.

The disclosed invention can be embodied in the form of computer or controller implemented processes and apparatuses for practicing those processes. The present invention can also be embodied in the form of computer program code containing instructions embodied in tangible media, such as floppy diskettes, CD-ROMs, hard drives, or any other computer-readable storage medium, wherein, when the computer program code is loaded into and executed by a computer or controller, the computer becomes an apparatus for practicing the invention. The present invention can also be embodied in the form of computer program code, for example, whether stored in a storage medium, loaded into and/or executed by a computer or controller, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose microprocessor, the computer program code segments configure the microprocessor to create specific logic circuits.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A method of determining an estimate of zero speed of a vehicle, the method comprising:
obtaining a drive train status signal (30);
acquiring a vehicle speed signal (36);
acquiring a throttle position signal (38); and
formulating a zero speed status signal (12) under selected conditions to in response to at least one of said drive train status signal (30), said vehicle speed signal (36), and said throttle position signal (38).

2. The method of Claim 1 wherein said conditions include when said drive train status signal (30) indicates a Park (P) state for said vehicle.

3. The method of Claim 1 wherein said conditions include when said drive train status signal (30) indicates other than a Park (P) state for said vehicle, and
(1) a vehicle speed status signal (46) responsive to said vehicle speed signal (36) indicates a vehicle speed less than a selected value; and
(2) a throttle position status signal (48) responsive to said throttle position signal (38) indicates a throttle position of about zero percent.

4. The method of Claim 3 wherein said selected value of vehicle speed is three miles per hour.

5. The method of Claim 1 wherein said conditions include when said drive train status signal (30) indicates said vehicle is in a Neutral (N) state and, a vehicle speed status signal (46) responsive to said vehicle speed signal (36) indicates a vehicle speed less than a selected value.

6. The method of Claim 5 wherein said selected value of vehicle speed is three miles per hour.

7. The method of Claim 1 wherein said conditions include at least one of:
(i). said drive train status signal (30) indicates a Park (P) state for said vehicle; and
(ii). said drive train status signal (30) indicates other than a Park (P) state for said vehicle, and
(1). a vehicle speed status signal (46) responsive to said vehicle speed signal (36) indicates a vehicle speed less than a selected value; and
(2). a throttle position status signal (48) responsive to said throttle position signal (38) indicates a throttle position of about zero percent; and
(iii). said drive train status signal (30) indicates said vehicle is in a Neutral (N) state and, a vehicle speed status signal (46) responsive to said vehicle speed signal (36) indicates a vehicle speed less than a selected value.

8. The method of Claim 7 wherein said selected value of vehicle speed is three miles per hour.

9. The method of Claim 1 further including:
obtaining at least one of a brake signal (34) and a parking brake signal (32); and
wherein said formulating is in response to at least one of said brake signal (34) and said parking brake signal (32).

10. The method of Claim 9 wherein said conditions include when said drive train status signal (30) indicates other than a Park (P) state for said vehicle, and
(1) a vehicle speed status signal (46) responsive to said vehicle speed signal (36) indicates a vehicle speed less than a selected value; and
(2) a throttle position status signal (48) responsive to said throttle position signal (38) indicates a throttle position of about zero percent; and
(3) at least one of said brake signal (34) and said parking brake signal (32) indicates a set condition.

11. The method of Claim 10 wherein said selected value of vehicle speed is three miles per hour.

12. The method of Claim 9 wherein said conditions include at least one of:
(i). said drive train status signal (30) indicates a Park (P) state for said vehicle; and
(ii). said drive train status signal (30) indicates other than a Park (P) state for said vehicle, and
(1). a vehicle speed status signal (46) responsive to said vehicle speed signal (36) indicates a vehicle speed less than a selected value; and
(2). a throttle position status signal (48) responsive to said throttle position signal (38) indicates a throttle position of about zero percent; and
(3). at least one of said brake signal (34) and said parking brake signal (32) indicates a set condition; and
(iii). said drive train status signal (30) indicates said vehicle is in a Neutral (N) state and, a vehicle speed status signal (46) responsive to said vehicle speed signal (36) indicates a vehicle speed less than a selected value.

13. The method of Claim 12 wherein said selected value of vehicle speed is three miles per hour.

14. A storage medium encoded with a machine-readable computer program code for determining an estimate of zero speed of a vehicle, said storage medium including instructions for causing controller (18) to implement a method comprising:
obtaining a drive train status signal (30);
acquiring a vehicle speed signal (36);
acquiring a throttle position signal (38); and
formulating a zero speed status signal (12) under selected conditions to in response to at least one of said drive train status signal (30), said vehicle speed signal (36), and said throttle position signal (38).

15. The storage medium of Claim 14 wherein said conditions include when said drive train status signal (30) indicates a Park (P) state for said vehicle.

16. The storage medium of Claim 14 wherein said conditions include when said drive train status signal (30) indicates other than a Park (P) state for said vehicle, and
(1) a vehicle speed status signal (46) responsive to said vehicle speed signal (36) indicates a vehicle speed less than a selected value; and
(2) a throttle position status signal (48) responsive to said throttle position signal (38) indicates a throttle position of about zero percent.

17. The storage medium of Claim 16 wherein said selected value of vehicle speed is three miles per hour.

18. The storage medium of Claim 14 wherein said conditions include when said drive train status signal (30) indicates said vehicle is in a Neutral (N) state and, a vehicle speed status signal (46) responsive to said vehicle speed signal (36) indicates a vehicle speed less than a selected value.

19. The storage medium of Claim 18 wherein said selected value of vehicle speed is three miles per hour.

20. The storage medium of Claim 14 wherein said conditions include at least one of:
(i). said drive train status signal (30) indicates a Park (P) state for said vehicle; and
(ii). said drive train status signal (30) indicates other than a Park (P) state for said vehicle, and
(1). a vehicle speed status signal (46) responsive to said vehicle speed signal (36) indicates a vehicle speed less than a selected value; and
(2). a throttle position status signal (48) responsive to said throttle position signal (38) indicates a throttle position of about zero percent; and
(iii). said drive train status signal (30) indicates said vehicle is in a Neutral (N) state and, a vehicle speed status signal (46) responsive to said vehicle speed signal (36) indicates a vehicle speed less than a selected value.

21. The storage medium of Claim 20 wherein said selected value of vehicle speed is three miles per hour.

22. The method of Claim 14 further including:
obtaining at least one of a brake signal (34) and a parking brake signal (32); and
wherein said formulating is in response to at least one of said brake signal (34) and said parking brake signal (32).

23. The method of Claim 22 wherein said conditions include when said drive train status signal (30) indicates other than a Park (P) state for said vehicle, and
(1) a vehicle speed status signal (46) responsive to said vehicle speed signal (36) indicates a vehicle speed less than a selected value; and
(2) a throttle position status signal (48) responsive to said throttle position signal (38) indicates a throttle position of about zero percent; and
(3) at least one of said brake signal (34) and said parking brake signal (32) indicates a set condition.

24. The method of Claim 23 wherein said selected value of vehicle speed is three miles per hour.

25. The method of Claim 22 wherein said conditions include at least one of:
(i). said drive train status signal (30) indicates a Park (P) state for said vehicle; and
(ii). said drive train status signal (30) indicates other than a Park (P) state for said vehicle, and
(1). a vehicle speed status signal (46) responsive to said vehicle speed signal (36) indicates a vehicle speed less than a selected value; and
(2). a throttle position status signal (48) responsive to said throttle position signal (38) indicates a throttle position of about zero percent; and
(3). at least one of said brake signal (34) and said parking brake signal (32) indicates a set condition; and
(iii). said drive train status signal (30) indicates said vehicle is in a Neutral (N) state and, a vehicle speed status signal (46) responsive to said vehicle speed signal (36) indicates a vehicle speed less than a selected value.

26. The method of Claim 25 wherein said selected value of vehicle speed is three miles per hour.

27. A computer data signal embodied in a carrier wave for determining an estimate of zero speed of a vehicle, said computer data signal comprising code configured to cause a controller (18) to implement a method comprising:
obtaining a drive train status signal (30);
acquiring a vehicle speed signal (36);
acquiring a throttle position signal (38); and
formulating a zero speed status signal (12) under selected conditions to in response to at least one of said drive train status signal (30), said vehicle speed signal (36), and said throttle position signal (38).

28. The computer data signal of Claim 27 wherein said conditions include when said drive train status signal (30) indicates a Park (P) state for said vehicle

29. The computer data signal of Claim 27 wherein said conditions include when said drive train status signal (30) indicates other than a Park (P) state for said vehicle, and
(1) a vehicle speed status signal (46) responsive to said vehicle speed signal (36) indicates a vehicle speed less than a selected value; and
(2) a throttle position status signal (48) responsive to said throttle position signal (38) indicates a throttle position of about zero percent.

30. The computer data signal of Claim 29 wherein said selected value of vehicle speed is three miles per hour.

31. The computer data signal of Claim 27 wherein said conditions include when said drive train status signal (30) indicates said vehicle is in a Neutral (N) state and, a vehicle speed status signal (46) responsive to said vehicle speed signal (36) indicates a vehicle speed less than a selected value.

32. The computer data signal of Claim 31 wherein said selected value of vehicle speed is three miles per hour.

33. The computer data signal of Claim 27 wherein said conditions include at least one of:
(i). said drive train status signal (30) indicates a Park (P) state for said vehicle; and
(ii). said drive train status signal (30) indicates other than a Park (P) state for said vehicle, and
(1). a vehicle speed status signal (46) responsive to said vehicle speed signal (36) indicates a vehicle speed less than a selected value; and
(2). a throttle position status signal (48) responsive to said throttle position signal (38) indicates a throttle position of about zero percent; and
(iii). said drive train status signal (30) indicates said vehicle is in a Neutral (N) state and, a vehicle speed status signal (46) responsive to said vehicle speed signal (36) indicates a vehicle speed less than a selected value.

34. The computer data signal of Claim 33 wherein said selected value of vehicle speed is three miles per hour.

35. The method of Claim 27 further including:
obtaining at least one of a brake signal (34) and a parking brake signal (32); and
wherein said formulating is in response to at least one of said brake signal (34) and said parking brake signal (32).

36. The method of Claim 35 wherein said conditions include when said drive train status signal (30) indicates other than a Park (P) state for said vehicle, and
(1) a vehicle speed status signal (46) responsive to said vehicle speed signal (36) indicates a vehicle speed less than a selected value; and
(2) a throttle position status signal (48) responsive to said throttle position signal (38) indicates a throttle position of about zero percent; and
(3) at least one of said brake signal (34) and said parking brake signal (32) indicates a set condition.

37. The method of Claim 36 wherein said selected value of vehicle speed is three miles per hour

38. The method of Claim 35 wherein said conditions include at least one of:
(i). said drive train status signal (30) indicates a Park (P) state for said vehicle; and
(ii). said drive train status signal (30) indicates other than a Park (P) state for said vehicle, and
(1). a vehicle speed status signal (46) responsive to said vehicle speed signal (36) indicates a vehicle speed less than a selected value; and
(2). a throttle position status signal (48) responsive to said throttle position signal (38) indicates a throttle position of about zero percent; and
(3). at least one of said brake signal (34) and said parking brake signal (32) indicates a set condition; and
(iii). said drive train status signal (30) indicates said vehicle is in a Neutral (N) state and, a vehicle speed status signal (46) responsive to said vehicle speed signal (36) indicates a vehicle speed less than a selected value.

39. The method of Claim 38 wherein said selected value of vehicle speed is three miles per hour.
